# EUROPÄISCHE PATENTSCHRIFT

(11) **EP 0 516 897 B1**
(45) Veröffentlichungstag und Bekanntmachung des Hinweises auf die Patenterteilung: **14.12.1994**
(21) Anmeldenummer: 91250149.1
(22) Anmeldetag: 07.06.1991
(51) Int. Cl.: G01G 17/06, G01G 19/32

(54) **Vorrichtung zum Dosieren von Flüssigkeiten**
Device for dosing fluids
Dispositif de dosage de liquides

(43) Veröffentlichungstag der Anmeldung: 09.12.1992
(73) Patentinhaber: FLUID MANAGEMENT LIMITED PARTNERSHIP, Wheeling, IL 60090-5799 (US)
(72) Erfinder: Krapalis, Michael, W-2000 Norderstedt (DE); Koppe, Klaus-Dieter, W-2000 Norderstedt (DE)
(74) Vertreter: UEXKÜLL & STOLBERG

(56) Entgegenhaltungen:
- DE-A- 3 032 182
- DE-A- 3 818 619
- DE-A- 4 002 255
- US-A- 4 211 263

## Beschreibung

Die Erfindung bezieht sich auf eine Vorrichtung zum Dosieren von unterschiedlichen, aus Flüssigkeitsvorräten entnehmbaren Flüssigkeiten über Dosierventile in einen Hauptbehälter, dem gesteuert von einer Hauptwaage jeweils Flüssigkeit vom jeweiligen Flüssigkeitsvorrat zuführbar ist, wobei für jede Flüssigkeit ein mit einer Feinwaage koppelbarer Pufferbehälter vorhanden ist, der jeweils zur Zufuhr einer kleinen Flüssigkeitsmenge zum Hauptbehälter gegenüber dem jeweiligen Flüssigkeitsvorrat abdichtbar und dessen Gewicht mittels Feinwaage feststellbar ist.

Bei einer bekannten Vorrichtung dieser Art (DE-A-3 818 619) werden die größeren Mengen der unterschiedlichen Flüssigkeiten über ein jeder der Flüssigkeit zugeordnetes Dosierventil in einen auf einer Hauptwaage befindlichen Hauptbehälter dosiert, während kleinere Mengen dieser Flüssigkeiten aus Pufferbehältern entnommen werden, die aus den Flüssigkeitsvorräten, die die vorstehend genannten Dosierventile speisen, befüllt werden. Mit Hilfe einer diesen Pufferbehältern gemeinsamen Feinwaage können aus ihnen kleinere Flüssigkeitsmengen über den Pufferbehältern jeweils zugeordnete Dosierventile entnommen werden, wobei diese kleineren Flüssigkeitsmengen auch in den Hauptbehälter geleitet werden können.

Bei dieser bekannten Vorrichtung sind vollständig getrennte Wege für kleine Flüssigkeitsmengen und für große Flüssigkeitsmengen vorgesehen, und somit auch entsprechend getrennte Dosierventile. Dies führt nicht nur zu einem verhältnismäßig großen Leitungsaufwand, sondern insbesondere auch dazu, daß oberhalb des Hauptbehälters eine große Anzahl von Dosierventilen vorgesehen ist, so daß der Hauptbehälter einen erheblichen Öffnungsquerschnitt aufweisen muß, damit sowohl große als auch kleine Flüssigkeitsmengen (über getrennte Dosierventile) in ihn eingebracht werden können. Darüber hinaus besteht bei der bekannten Vorrichtung das Problem, daß die in den Pufferbehältern enthaltenen Flüssigkeiten dort häufig längere Zeit ohne Abgabe von Flüssigkeit aus dem jeweiligen Pufferbehälter aufbewahrt werden. In diesen in den Pufferbehältern aufbewahrten Flüssigkeitenkönnen sich Feststoffteilchen in Richtung auf den Boden des Pufferbehälters ablagern, oder es können auch andere Veränderungen in den Flüssigkeiten auftreten, so daß die dann tatsächlich mit Hilfe der Feinwaage aus dem Pufferbehälter dosierte Flüssigkeit nicht genau mit derjenigen übereinstimmt, die für den Dosiervorgang eigentlich benötigt wird.

Der Erfindung liegt die Aufgabe zugrunde, eine genau und reproduzierbar arbeitende Dosiervorrichtung zu schaffen, mit der auch Hauptbehälter mit verhältnismäßig kleinem Öffnungsquerschnitt befüllt werden können.

Zur Lösung dieser Aufgabe wird eine Vorrichtung der Eingangs erwähnten Art erfindungsgemäß derart ausgestaltet, daß für jede Flüssigkeit ein einziges Dosierventil vorhanden ist, das zur Durchführung des Dosiervorganges jeweils in eine Stellung oberhalb des Hauptbehälters bewegbar ist und das mit dem zugehörigen Pufferbehälter verbunden ist, und daß der zugehörige Pufferbehälter im Verlauf der Verbindungsleitung von jeweiligen Flüssigkeitsvorrat und Dosierventil liegt.

Bei der erfindungsgemäßen Dosiervorrichtung ist somit für jede der zu dosierenden Flüssigkeiten ein einziges Dosierventil vorhanden, über das sowohl große als auch kleine Flüssigkeitsmengen dosiert werden können, wobei wahlweise die Hauptwaage und die Feinwaage zum Einsatz kommt, jedoch in jedem Fall die Flüssigkeit zum für diese Flüssigkeit einzigen Dosierventil gelangt. Bei der Abgabe einer großen Flüssigkeitsmenge wird die Flüssigkeit vom Flüssigkeitsvorrat zum Dosierventil und von dort in den Hauptbehälter befördert, bis die Hauptwaage das Erreichen der gewünschten Flüssigkeitsmenge feststellt und die weitere Förderung unterbricht. Das Dosieren von kleinen Flüssigkeitsmengen erfolgt aus dem Pufferbehälter, wozu dieser gegenüber dem Flüssigkeitsvorrat abgedichtet wird und unter Ermittlung der abgegebenen Flüssigkeitsmenge durch die Feinwaage dem Dosierventil Flüssigkeit zuführt. Da das Dosierventil für die Durchführung des Dosiervorgangs in eine Stellung oberhalb des Hauptbehälters bewegbar ist, braucht dieser lediglich einen solchen Öffnungsquerschnitt zu haben, daß in ihn aus dem jeweiligen Dosierventil Flüssigkeit abgegeben werden kann.

Darüber hinaus liegt bei der erfindungsgemäßen Vorrichtung der Pufferbehälter im Verlauf der Verbindungsleitung von Flüssigkeitsvorrat und Dosierventil, etwa derart, daß der untere Bereich des Pufferbehälterinnenraums einen Teil der Verbindungsleitung bildet, oder beispielsweise so, daß der Pufferbehälter am Boden einen sich nach unten erstreckenden Rohrstutzen aufweist, der von einem Teil eines T-förmigen Rohrstückes gebildet wird, dessen Durchgangsabschnitt Teil der Verbindungsleitung ist. Daher kommt beim Dosieren einer großen Flüssigkeitsmenge die vom Flüssigkeitsvorrat zum Dosierventil strömende Flüssigkeit in Berührung mit der noch im Pufferbehälter vorhandenen Flüssigkeit, und es wird ein Austausch bzw. Verbrauch der noch im Pufferbehälter vorhandenen Flüssigkeit bewirkt, so daß Ungenauigkeiten infolge von Zersetzungen, Ablagerungen u.ä. im Pufferbehälter vermieden werden.

Um das Gewicht des Pufferbehälters einschließlich in ihm vorhandener Flüssigkeit unabhängig von Umgebungseinflüssen und insbesondere unabhängig von der Verbindung des Pufferbehälters mit dem Flüssigkeitsvorrat einerseits und dem Dosierventil andererseits feststellen zu können und um Gewichtsänderungen exakt ermitteln zu können, kann der jeweilige Pufferbehälter über eine erste elastische Leitung mit dem Dosierventil sowie über eine zweite elastische Leitung mit dem zugehörigen Flüssigkeitsvorrat verbunden sein, wobei die elastischen Leitungen beispielsweise durch balgförmige Leitungen gebildet sind.

Das Verformungsverhalten der elastischen Leitungen läßt sich leicht ermitteln und kann bei der Justierung der Feinwaage berücksichtigt werden, so daß die von der Feinwaage ermittelte Gewichtsänderung des Pufferbehälters nicht durch die Eigenschaften der elastischen Leitungen beeinflußt wird, sondern der Pufferbehälter gegenüber seiner Umgebung "entkoppelt" ist.

Um aus dem Pufferbehälter im Falle der Feindosierung kontinuierlich Flüssigkeit austragen zu können, kann der Pufferbehälter eine mit einer definierten Last, etwa einem Gewicht, einer Feder o.ä. beaufschlagte, in der Senkrechten bewegbare Abdeckung aufweisen, die einerseits den Wiegevorgang nicht beeinträchtigt oder verfälscht und durch die andererseits ein Druck auf die im Pufferbehälter vorhandene Flüssigkeit ausgeübt wird, mit dessen Hilfe diese in Richtung auf das Dosierventil gedrückt wird. Dabei kann die Größe der Last so gewählt werden, daß auch Flüssigkeiten mit verhältnismäßig hoher Viskosität aus dem Pufferbehälter zum Dosierventil gepreßt werden, während bei Flüssigkeiten mit sehr niedriger Viskosität auch auf die Last verzichtet werden kann.

Um für den Feinwiegevorgang eine Abdichtung des Pufferbehälters gegenüber dem Flüssigkeitsvorrat zu bewirken, kann im mit dem Flüssigkeitsvorrat verbundenen Einlaß des Pufferbehälters ein in Richtung auf den Flüssigkeitsvorrat federbelastetes Rückschlagventil vorgesehen sein, daß beim Austragen von Flüssigkeit aus dem Pufferbehälter, etwa durch die auf die Abdeckung wirkende Last in Sperrichtung belastet wird, während es bei Zufuhr von Flüssigkeit vom Flüssigkeitsvorrat zum Pufferbehälter in die geöffnete Stellung gedrückt wird.

Es sei erwähnt, daß bei der erfindungsgemäßen Vorrichtung üblicherweise die die Dosierung einer kleinen Flüssigkeitsmenge steuernde Feinwaage nur mit dem Gewicht des diese Flüssigkeit enthaltenden Pufferbehälters belastet wird und nicht, wie beim Stand der Technik, mit dem Gewicht einer Gruppe von Pufferbehältern.

In einer bevorzugten Ausgestaltung der Erfindung hängt der Pufferbehälter an der Feinwaage.

Die Erfindung wird im folgenden anhand der schematisch und vereinfacht ein Ausführungsbeispiel zeigenden Figuren näher erläutert.
- Figur 1: zeigt in einer schematischen Seitenansicht und teilweise im Schnitt eine Dosiervorrichtung mit auf einem Schlitten befestigten Dosierventil, mit mit dem Schlitten verfahren Pufferbehälter sowie mit Flüssigkeitsvorratsbehälter.
- Figur 2: zeigt in einer Prinzip-Draufsicht mehrere auf dem Schlitten gemäß Figur 1 angeordnete, gleichartige Dosiervorrichtungen mit Dosierventil und Pufferbehälter, wobei Dosierventil und Pufferbehälter aus Figur 1 in der Mitte angeordnet sind.

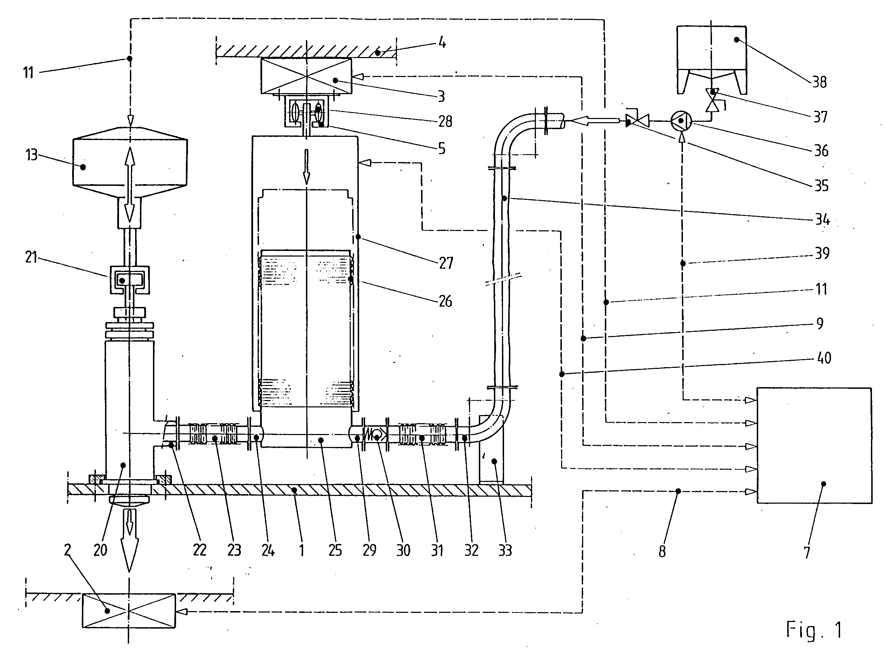

Der schematisch dargestellte, plattenförmige Schlitten 1, der in nicht gezeigter Weise in Schienen verfahrbar gehaltert ist, trägt Dosierventile 20, 120, 220 sowie zwei weitere, nicht bezeichnete Dosierventile, die alle in Verfahrrichtung des Schlittens 1 auf einer Geraden angeordnet sind. Wie in Figur 1 zu erkennen ist, ist jedes der Dosierventile 20, 120, 220 in eine Durchgangsbohrung im Schlitten 1 eingesetzt und mit Hilfe von auf den Schlitten 1 aufgeschraubten Halteelementen in seiner Lage festgelegt.

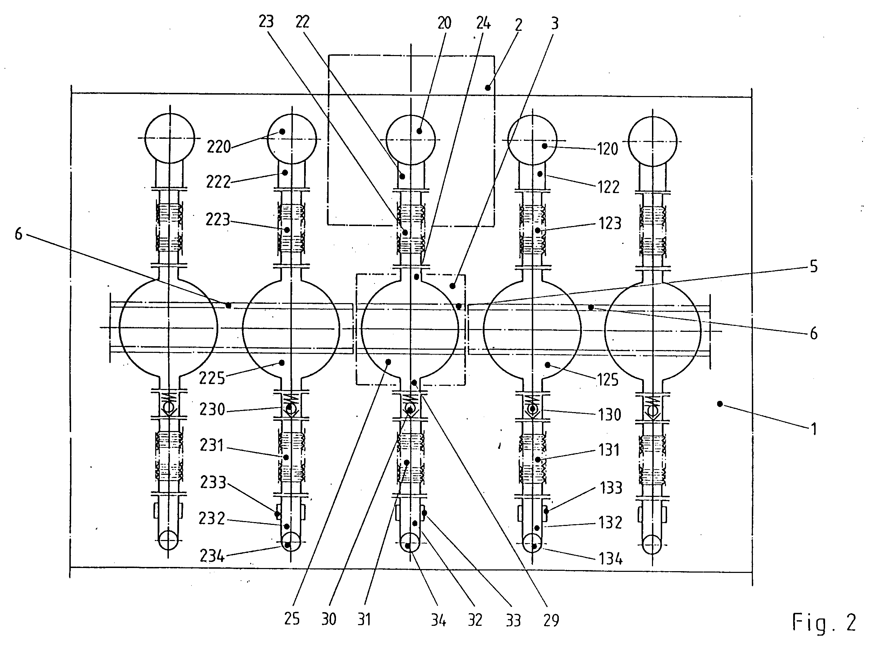

Wie Figur 2 zeigt, ist jedem Dosierventil 20, 120, 220 und auch den nicht bezeichneten Dosierventilen ein noch zu beschreibender Pufferbehälter 25, 125, 225 zugeordnet, so daß mit Hilfe des jeweiligen Dosierventils sowohl die gesteuerte Abgabe einer großen als auch einer kleinen Flüssigkeitsmenge möglich ist und deshalb die Dosierventile zu dieser wahlweisen Abgabe von großen oder kleinen Flüssigkeitsmengen in bekannter Weise ausgebildet sind. Es wäre jedoch auch möglich, einigen der Dosierventile keine Pufferbehälter zuzuordnen, sondern sie direkt mit den Flüssigkeitsvorratsbehältern zu verbinden, um allein große Flüssigkeitsmengen dosieren zu können. Entsprechend können lediglich mit Pufferbehältern gekoppelte Dosierventile allein zur Abgabe von kleinen Flüssigkeitsmengen vorgesehen sein. Für diese können für die Abgabe großer Flüssigkeitsmengen und für die Abgabe kleiner Flüssigkeitsmengen jeweils speziell angepaßte Dosierventile eingesetzt werden.

Im folgenden werden zunächst Aufbau und Funktionsweise der Vorrichtung entsprechend Figur 1 erläutert, und es sei erwähnt, daß in Figur 2 für gleiche Teile wie in Figur 1 gleiche und für entsprechende Teile um 100 bzw. um 200 erhöhte Bezugszeichen verwendet werden. Derartig entsprechend bezeichnete Teile werden nicht zusätzlich noch einmal beschrieben werden.

Wie bereits dargelegt, ist das Dosierventil 20 im plattenförmigen Schlitten 1 befestigt, und es befindet sich in der dargestellten Lage oberhalb der schematisch angedeuteten Hauptwaage 2, auf der ein Behälter zur Aufnahme von Flüssigkeit positioniert werden kann. Die Hauptwaage 2 hat einen großen Wiegebereich von beispielsweise mehreren Tonnen und daher eine verhältnismäßig geringe Genauigkeit von beispielsweise ±100 g. Sie ist über eine Leitung 8 mit einer Steuereinheit 7 verbunden, die die Hauptwaage 2 im Falle der Dosierung einer großen Flüssigkeitsmenge aus einem Dosierventil aktiviert und die von der Hauptwaage 2 abgegebenen Daten auswertet, um den Abgabevorgang nach Dosieren einer vorgegebenen Flüssigkeitsmenge in den auf der Hauptwaage 2 stehenden Behälter zu unterbrechen.

Das Dosierventil 20 ist über einen Anschluß 22, eine flexible Leitung 23, die beispielsweise aus einem Balg aus Edelstahl bestehen kann, den Einlaß 24 eines noch zu beschreibenden Pufferbehälters 25, diesen Pufferbehälter und dessen Auslaß 29 sowie über ein Rückschlagventil 30, eine flexible Leitung 31, etwa aus einem Balg aus Edelstahl, einen Rohrkrümmer 32, eine Schlauch 34 und eine Rohrleitung o.ä. mit Absperrhahn 35, Pumpe 36 und Absperrhahn 37 mit einem Flüssigkeitsvorratsbehälter 38 für die dosierende Flüssigkeit verbunden. Sind daher die Absperrhähne 35 und 37 geöffnet und aktiviert die Steuereinheit 7 über die Leitung 39 die Pumpe 36, so strömt Flüssigkeit aus dem Flüssigkeitsvorratsbehälter 38 durch den Schlauch 34, den Rohrkrümmer 32, die flexible Leitung 31, das infolge des Flüssigkeitsdrucks geöffnete Rückschlagventil 30, den Pufferbehälter 25, die flexible Leitung 23 zum Dosierventil 20. Eine zentrale Betätigungseinrichtung 13, deren Betätigungselement in Eingriff mit einem Betätigungsteil 21 des sich in der Dosierstellung oberhalb der Hauptwaage 2 befindenden Dosierventils 20 in Eingriff steht und von der Steuereinheit 7 über eine Leitung 11 angesteuert wird, öffnet das Dosierventil 20. Im geöffneten Zustand des Dosierventils 20 fließt daher aus diesem mit verhältnismäßig großem Durchsatz Flüssigkeit aus und gelangt in den nicht dargestellten, auf der Hauptwaage 2 befindlichen Flüssigkeitsbehälter. Ergibt sich aus den von der Hauptwaage erzeugten Signalen, daß der Dosiervorgang beendet werden soll, schließt die Steuereinheit 7 durch entsprechende Beaufschlagung der Betätigungseinrichtung 13 das Dosierventil 20. Ferner wird üblicherweise über die Leitung 39 die Pumpe 36 stillgesetzt.

Soll mittels des Dosierventils 20 eine sehr kleine Flüssigkeitsmenge genau dosiert abgegeben werden, muß das Dosierventil 20 selbstverständlich auch für diese Betriebsweise ausgelegt sein. Zu diesem Zweck dient im übrigen der Pufferbehälter 25, der, wie bereits erwähnt, mit dem Einlaß 22 des Dosierventils 20 über eine elastische Leitung 23 und mit dem Rohrkrümmer 32 über eine elastische Leitung 31 verbunden ist. Die jeweils äußeren Enden der elastischen Leitungen 23 und 31 werden durch die Befestigung des Dosierventils 20 am Schlitten 1 und die Abstützung des Rohrkrümmers 32 auf dem Schlitten 1 mittels des Bockes 33 in einer genau definierten Lage gehalten, ohne daß sie sich im Betrieb bewegen können. Dadurch "hängt" der Dosierbehälter 25 von den elastischen Leitungen 23 und 31 gehalten zwischen Einlaß 22 des Dosierventils 20 und Rohrkrümmer 32.

Der Pufferbehälter 25 hat einen unteren stabilen Wandbereich, an den sich ein im wesentlichen zylinderischer, balgförmiger Wandabschnitt 26 anschließt, der an der Oberseite geschlossen ist. Dieser balgförmige Abschnitt 26 ist von einem Kammerabschnitt 27 umgeben, der mit seinem unteren Ende in dichtendem, unverlagerbarem Eingriff mit dem festen Abschnitt des Dosierbehälters 25 steht und den balgförmigen Abschnitt 26 dichtend umgibt. An den Kammerabschnitt 27 ist eine elastische Druckluftleitung (nicht dargestellt) angeschlossen, die über eine schematisch angedeutete Signalleitung 40 von der Steuereinheit 7 geöffnet werden kann, um im Innenraum des Kammerabschnitts 27 einen vorgegebenen Überdruck zu erzeugen, der auf die Endwand des balgförmigen Abschnittes 26 wirkt und so den balgförmigen Abschnitt 26 in Richtung einer Zusammendrückung belastet.

Der Kammerabschnitt 27 trägt an seinem oberen Ende Rollen 28, die in einer im Querschnitt im wesentlichen C-förmigen Schiene 5 laufen und so den Kammerabschnitt 27 und damit den Pufferbehälter 25 an der Schiene 5 hängend halten. Die Schiene 5 ist an einer an einem stationären Deckenteil 4 befestigten Feinwaage 3 befestigt, die über eine Signalleitung 9 mit der Steuereinheit 7 verbunden ist, so daß die Steuereinheit 7 die Feinwaage 3 einschalten und die von ihr abgegebenen Wiegesignale auswerten kann.

Soll mit Hilfe der Feinwaage 3 eine kleine Flüssigkeitsmenge genau dosiert, etwa mit einer Toleranz von ±0,1 g aus dem Dosierventil 20 abgegeben werden, wird zunächst bei geschlossenem Dosierventil 20 Flüssigkeit aus dem Vorratsbehälter 38 in den Pufferbehälter 25 gefördert. Ist der Pufferbehälter ausreichend gefüllt, wird mit Hilfe der Steuereinheit 7 im Kammerabschnitt 27 des Pufferbehälters 25 ein an die Viskosität der Flüssigkeit angepaßter Überdruck erzeugt, wobei infolge dieses Überdrucks das zwischen Einlaß 29 und elastischer Leitung 31 sitzende Rückschlagventil 30 in Richtung auf den Vorratsbehälter 38 belastet und damit in die Schließstellung gebracht wird, d.h. es kann keine weitere Flüssigkeit aus dem Vorratsbehälter 38 in den Pufferbehälter 25 nachgefördert werden. In diesem Betriebszustand wird die Feinwaage 3 aktiviert und unter Berücksichtigung der Eigenschaften der elastischen Leitungen 23 und 31 sowie der nicht dargestellten, mit dem Kammerabschnitt 27 verbundenen elastischen Druckluftleitung auf einen Null-Wert gestellt, wobei die Wiegecharakteristik der Feinwaage 3 unter Berücksichtigung der zuvor ermittelten Eigenschaften der elastischen Leitungen festgelegt wird. Über die Leitung 11 wird dann die Betätigungseinrichtung 13 aktiviert, so daß sie das Dosierventil 20 derart öffnet, daß dieses mit äußerst geringem Durchsatz, gegebenenfalls tropfenweise Flüssigkeit abgibt, die infolge des Überdrucks im Kammerabschnitt 27 aus dem Pufferbehälter 25 herausgedrückt wird, bei ausreichend niedriger Viskosität jedoch auch ohne Druckbelastung ausfließen kann. Dadurch verringert sich das Gewicht des Pufferbehälters 25 entsprechend der Menge der abgegebenen Flüssigkeit, und diese Gewichtsverringerung wird durch die Feinwaage 3 festgestellt.

Sobald die gewünschte Flüssigkeitsmenge abgegeben ist, schließt die Steuereinheit 7 über die Leitung 11 das Dosierventil 20, und der Dosiervorgang ist beendet.

Wie in Figur 2 gezeigt, sind auf dem Schlitten 1 mehrere Vorrichtungen aus Dosierventil und Pufferbehälter befestigt, die in der beschriebenen Weise aufgebaut und jeweils mit einem Vorratsbehälter für Flüssigkeit verbunden sind.

Die in Figur 1 dargestellte Vorrichtung befindet sich in der Darstellung gemäß Figur 2 in der Stellung, in der die Betätigungseinrichtung 13 in Eingriff mit dem Dosierventil 20 steht und der Pufferbehälter 25 an der Schiene 5 hängt, die an der Feinwaage 3 befestigt ist. Die Pufferbehälter der übrigen Vorrichtungen hängen an Schienen 6, die in Fortsetzung der Schiene 5 verlaufen und die gleiche Querschnittsform wie diese haben, jedoch von dieser getrennt sind, also nicht in Eingriff mit der Schiene 5 und damit mit der Feinwaage 3 stehen.

Um mit Hilfe einer der Vorrichtungen, die zusätzlich zu der das Dosierventil 20 aufweisenden Vorrichtung auf dem Schlitten 1 angeordnet sind, Flüssigkeit in einen auf der Hauptwaage 2 stehenden Behälter austragen zu können, wird der Schlitten 1 in Figur 2 nach rechts oder links verfahren, so daß das gewünschte Dosierventil, beispielsweise das Dosierventil 120 in eine Stellung oberhalb der Hauptwaage 2 gelangt, also in die Stellung, in der sich in den Figuren 1 und 2 die Vorrichtung mit dem Dosierventil 20 befindet. Dadurch kommt das Dosierventil 120 auch in Eingriff mit der Betätigungseinrichtung 13, und der Pufferbehälter 125 hängt in der Schiene 5 und steht damit in Eingriff mit der Feinwaage 3.

In dieser Stellung von Dosierventil 120 und Pufferbehälter 125 kann dann aus dem zugehörigen, nicht dargestellten, mit dem Schlauch 134 über eine Rohrleitung verbundenen Vorratsbehälter Flüssigkeit in der vorstehend im Zusammenhang mit der Vorrichtung gemäß Figur 1 beschriebenen Weise dosiert werden.

## Patentansprüche

1. Vorrichtung zum Dosieren von unterschiedlichen, aus Flüssigkeitsvorräten entnehmbaren Flüssigkeiten über Dosierventile (20; 120; 220) in einen Hauptbehälter, dem gesteuert von einer Hauptwaage (2) jeweils Flüssigkeit vom jeweiligen Flüssigkeitsvorrat (38) zuführbar ist, wobei für jede Flüssigkeit ein mit einer Feinwaage (3) koppelbarer Pufferbehälter (25; 125; 225) vorhanden ist, der jeweils zur Zufuhr einer kleinen Flüssigkeitsmenge zum Hauptbehälter gegenüber dem jeweiligen Flüssigkeitsvorrat (38) abdichtbar und dessen Gewicht mittels der Feinwaage (3) feststellbar ist, **dadurch gekennzeichnet,** daß für jede Flüssigkeit ein einziges Dosierventil (20; 120; 220) vorhanden ist, das zur Durchführung des Dosiervorganges jeweils in eine Stellung oberhalb des Hauptbehälters bewegbar ist und das mit dem zugehörigen Pufferbehälter (25; 125; 225) verbunden ist, und daß der zugehörige Pufferbehälter (25; 125; 225) im Verlauf der Verbindungsleitung von jeweiligen Flüssigkeitsvorrat (38) und Dosierventil (20) liegt.

2. Vorrichtung nach Anspruch 1, **dadurch gekennzeichnet,** daß der jeweilige Pufferbehälter (25) über eine erste elastische Leitung (23) mit dem Dosierventil (20) sowie über eine zweite elastische Leitung (31 mit dem zugehörigen Flüssigkeitsvorrat (38) verbunden ist.

3. Vorrichtung nach Anspruch 2, **dadurch gekennzeichnet,** daß die elastischen Leitungen (23; 31) durch balgförmige Leitungen gebildet sind.

4. Vorrichtung nach irgendeinem der Ansprüche 1 bis 3, **dadurch gekennzeichnet,** daß der jeweilige Pufferbehälter (25) zur Volumenänderung eine in der Senkrechten bewegbare Abdeckung (26) aufweist.

5. Vorrichtung nach irgendeinem der Ansprüche 1 bis 4, **dadurch gekennzeichnet,** daß im mit dem jeweiligen Flüssigkeitsvorrat (38) verbundenen Einlaß (29) des jeweiligen Pufferbehälters (25) ein in Richtung auf den Flüssigkeitsvorrat (38) federbelastetes Rückschlagventil (30) vorgesehen ist.

6. Vorrichtung nach irgendeinem der Ansprüche 1 bis 5, dadurch gekennzeichnet, daß der jeweilige Pufferbehälter (25) an der Feinwaage (3) hängt.

## Claims

1. Device for metering different liquids, which can be drawn from liquid stores, by means of metering valves (20; 120; 220) into a main reservoir to which liquid from the respective liquid store (38) can respectively be fed, controlled by a main balance (2), there being present for each liquid a buffer reservoir (25; 125; 225), which can be coupled to a precision balance (3) and which respectively, for the supply of a small quantity of liquid to the main reservoir, can be sealed against the respective liquid store (38) and the weight of which can be determined by means of the precision balance (3), characterized in that for each liquid there is a single metering valve (20; 120; 220) present, which, for the performance of the metering operation, can respectively be moved into a position above the main reservoir and which is connected to the associated buffer reservoir (25; 125; 225), and in that the associated buffer reservoir (25; 125; 225) is situated in the path of the connecting line of the respective liquid store (38) and metering valve (20).

2. Device according to Claim 1, characterized in that the respective buffer reservoir (25) is connected by a first, elastic line (23) to the metering valve (20) and by a second, elastic line (31) to the associated liquid store (38).

3. Device according to Claim 2, characterized in that the elastic lines (23; 31) are formed by bellows-shaped lines.

4. Device according to any one of Claims 1 to 3, characterized in that the respective buffer reservoir (25), for altering the cubic capacity, exhibits a cover (26) which is movable in the perpendicular.

5. Device according to any one of Claims 1 to 4, characterized in that, in that inlet (29) of the respective buffer reservoir (25), which inlet is connected to the respective liquid store (38), there is provided a non-return valve (30) which is spring-loaded in the direction of the liquid store (38).

6. Device according to any one of Claims 1 to 5, characterized in that the respective buffer reservoir (25) hangs from the precision balance (3).

## Revendications

1. Dispositif pour doser, au moyen de robinets de dosage (20; 120; 220), des liquides différents, à extraire de réservoirs de liquide, dans un récipient principal dans lequel chaque liquide peut être amené du réservoir de liquide respectif (38) sous la commande d'une balance principale (2), dispositif dans lequel, pour chaque liquide, est prévu un récipient tampon (25; 125; 225) qui peut se coupler avec une balance de précision (3), qui, pour l'arrivée d'une petite quantité de chaque liquide dans le récipient principal, peut être rendu étanche à l'égard du réservoir de liquide respectif (38) et dont le poids peut être déterminé au moyen de la balance de précision (3), caractérisé par le fait que pour chaque liquide il y a un unique robinet de dosage (20; 120; 22o) qui, pour l'exécution du processus de dosage, peut venir chaque fois en une position située au-dessus du récipient principal et qui est relié avec le récipient tampon correspondant (25; 152; 225), et que le récipient tampon respectif (25; 125; 225) se trouve sur le parcours de la conduite de liaison du réservoir de liquide respectif (38) et du robinet de dosage (20).

2. Dispositif selon la revendication 1, caractérisé par le fait que chaque réservoir tampon (25) est relié avec le robinet de dosage (20) par l'intermédiaire d'une première conduite élastique (23) et avec le réservoir de liquide respectif (38) par l'intermédiaire d'une seconde conduite élastique (31).

3. Dispositif selon la revendication 2, caractérisé par le fait que les conduites élastiques (23; 31) sont formées par des conduites en forme de soufflet.

4. Dispositif selon l'une quelconque des revendications 1 à 3, caractérisé par le fait que chaque récipient tampon (25) présente, aux fins de modification de son volume, un couvercle (26) qui peut se déplacer selon la verticale.

5. Dispositif selon l'une quelconque des revendications 1 à 4, caractérisé par le fait qu'à l'entrée (29) de chaque récipient tampon (25) reliée au réservoir de liquide respectif (38) est prévu un clapet de non-retour (30) contraint, par un ressort, dans la direction du réservoir de liquide (38).

6. Dispositif selon l'une quelconque des revendications 1 à 5, caractérisé par le fait que le récipient tampon en question (25) est suspendu à la balance de précision (3).
